# FASCICULE DE BREVET EUROPEEN

(11) **EP 2 193 296 B1**
(45) Date de publication et mention de la délivrance du brevet: **30.03.2011**
(21) Numéro de dépôt: 08840450.4
(22) Date de dépôt: 26.09.2008
(51) Int. Cl.: F16K 11/044, F16K 27/02, F16K 31/00, G05D 23/13

(54) **MITIGEUR THERMOSTATIQUE ET PROCEDE DE FABRICATION D'UN TEL MITIGEUR**
EINTEILIGE THERMOSTATISCHE ARMATUR UND VERFAHREN ZUR HERSTELLUNG EINER SOLCHEN EINTEILIGEN THERMOSTATISCHEN ARMATUR
THERMOSTATIC SINGLE-UNIT FAUCET AND METHOD FOR MAKING SUCH SINGLE-UNIT FAUCET

(30) Priorité: 27.09.2007 FR 0757902
(43) Date de publication de la demande: 09.06.2010
(73) Titulaire: Vernet, 91340 Ollainville (FR)
(72) Inventeur: JAGER, Frédéric Robert, F-91530 Saint-Cheron (FR)
(74) Mandataire: Grand, Guillaume
(86) Numéro de dépôt international: PCT/FR2008/051718
(87) Numéro de publication internationale: WO 2009/050380

(56) Documents cités:
- EP-A- 1 128 104
- DE-A1- 2 409 129
- DE-A1- 2 703 950
- DE-A1- 19 502 147
- FR-A- 2 569 814

## Description

La présente invention concerne un mitigeur thermostatique, ainsi qu'un procédé de fabrication d'un tel mitigeur.

L'invention s'applique en particulier au domaine sanitaire et s'intéresse ainsi aux robinets mitigeurs, tant pour un lavabo que pour une douche par exemple, qui permettent de « mitiger », c'est-à-dire de mélanger un courant entrant d'eau froide et un courant entrant d'eau chaude pour constituer un unique courant d'eau sortante à une température intermédiaire entre les températures respectives de l'eau chaude et de l'eau froide.

De tels mitigeurs sont dits « thermostatiques » lorsqu'ils permettent de réguler la température de l'eau mitigée à une valeur sensiblement constante et réglable, indépendamment des pressions et des températures respectives de l'eau froide et de l'eau chaude, et du débit de l'eau mitigée, dans une certaine gamme de pression et de débit. Cette fonction thermostatique est assurée par des moyens ad hoc qui sont agencés essentiellement à l'intérieur d'une enveloppe creuse, en formant ainsi avantageusement un ensemble pré-assemblé que l'on qualifie de « cartouche thermostatique » et qui est mis en place d'un seul tenant à l'intérieur du corps externe tubulaire du mitigeur. Des exemples d'une telle cartouche thermostatique et d'un mitigeur intégrant cette cartouche sont donnés dans FR-A-2 774 740.

En pratique, il est nécessaire de fixer fermement la cartouche à l'intérieur du corps de mitigeur, afin de la maintenir en place de manière sûre lors de la circulation de l'eau à travers le mitigeur. Dans le cas d'une enveloppe de cartouche métallique, une fixation par des vis traversant le corps de mitigeur garantit une liaison particulièrement robuste. Toutefois, de telles cartouches à enveloppe métallique sont notablement plus chères que les cartouches à enveloppe en matière plastique, dont l'utilisation est par conséquent privilégiée. La fixation des enveloppes de cartouche en matière plastique pose, quant à elle, des problèmes de tenue mécanique en service. En effet, une possibilité connue consiste à solidariser à l'enveloppe plastique un insert métallique, utilisé avec une vis sans tête pour ne pas mettre la cartouche de travers dans le corps de mitigeur. Cette solution permet de fixer rapidement et facilement la cartouche à l'intérieur du corps de mitigeur, mais, du fait de l'absence de liaison rigide entre l'insert et le corps de mitigeur, elle ne résiste pas à de fortes sollicitations, en particulier liées à la pression d'eau dans le corps de mitigeur. Une autre solution connue consiste à recourir à des systèmes rapportés plus robustes, interposés entre le corps de mitigeur et l'enveloppe de cartouche. Cependant, ces systèmes comportent plusieurs petites pièces, ce qui complique leur assemblage au reste de mitigeur, et/ou consistent en des pièces encombrantes et chères : par exemple, FR-A-2 774 740 propose d'utiliser soit un écrou de grande dimension, qui est directement vissé dans le corps de mitigeur, soit une fourche qui est intégralement rapportée de manière transversale au corps de mitigeur, depuis l'extérieur de ce dernier. De tels systèmes plus robustes imposent des aménagements particuliers pour le corps de mitigeur, tels qu'un taraudage périphérique pour visser l'écrou précité ou une fente étendue pour mettre en place la fourche précitée, et obligent à mettre en place la cartouche dans le corps de mitigeur avant la mise en place d'une manette de réglage de température, ce qui complique l'assemblage et la maintenance du mitigeur.

Un tel mitigeur ainsi qu'un tel procédé de fabrication sont déjà connus par le document DE2703950.

Le but de la présente invention est de proposer un mitigeur thermostatique, dont la fixation entre le corps de mitigeur et l'enveloppe plastique de la cartouche soit à la fois plus robuste en service et moins compliquée à réaliser.

A cet effet, l'invention a pour objet un mitigeur thermostatique, tel que défini à la revendication 1.

L'idée à la base de l'invention est d'interposer entre le corps de mitigeur et l'enveloppe plastique de la cartouche la pièce rigide définie ci-dessus : avant fixation de la cartouche au corps de mitigeur, cette pièce est mobile suivant l'axe de déplacement par rapport à la cartouche, tout en étant avantageusement intégrée à celle-ci pour pouvoir être rapportée conjointement à cette cartouche dans le corps du mitigeur. La mobilité de la pièce rigide est mise à profit pour, lorsque la cartouche est rapportée à l'intérieur du corps de mitigeur, permettre son placage contre la face intérieure du corps de mitigeur, sous l'action du vissage de la vis introduite dans son taraudage. Par serrage de la vis dont la tête est en butée contre la face extérieure du corps de mitigeur, la liaison entre la pièce mobile et le corps de mitigeur est efficacement rigidifiée suivant l'axe de déplacement, ce qui, en combinaison avec la liaison cinématique entre l'enveloppe et la pièce à la fois suivant la direction de l'axe longitudinal du corps de mitigeur et en rotation autour de l'axe précité, immobilise fermement l'enveloppe par rapport au corps de mitigeur. La structure rigide de la pièce mobile garantit une immobilisation efficace de l'enveloppe, même si cette pièce n'est plaquée contre la face intérieure du corps du mitigeur que d'un seul coté. L'invention fournit ainsi une fixation robuste de l'enveloppe de cartouche par rapport au corps de mitigeur, dans le sens où cette fixation résiste à la pression statique et aux phénomènes de pression dynamique, couramment appelés « coups de bélier », à l'intérieur du mitigeur. En outre, l'utilisation avantageuse d'une vis unique et/ou d'une manette de réglage de température pré-assemblée d'un seul tenant à la cartouche facilite l'assemblage et la maintenance du mitigeur. La fixation de la cartouche peut ainsi être réalisée de manière particulièrement rapide et économique, aucun outillage particulier n'étant nécessaire. Pour ce qui concerne le corps de mitigeur, la présence du trou de passage de la tige de la vis correspond à un aménagement minime. De surcroît, la pièce rigide et la vis sont totalement dissimulées à l'intérieur du corps de mitigeur, à l'exception de la tête de la vis, qui est avantageusement fraisée et positionnée dans une zone du corps de mitigeur non exposée à la vue de l'utilisateur, pour garantir l'esthétique de la robinetterie incluant le mitigeur conforme à l'invention.

D'autres caractéristiques avantageuses du mitigeur thermostatique conforme à l'invention, prises isolément ou suivant toutes les combinaisons techniquement possibles, sont énoncées aux revendications dépendantes 2 à 9.

L'invention a également pour objet un procédé de fabrication d'un mitigeur thermostatique, tel que défini à la revendication 10.

Le procédé conforme à l'invention permet de fabriquer un mitigeur thermostatique tel que défini plus haut. Comme justifié ci-dessus et expliqué en détails ci-après, ce procédé est rapide, économique et fiable.

L'invention sera mieux comprise à la lecture de la description qui va suivre, donnée uniquement à titre d'exemple et fait en se référant aux dessins sur lesquels :
- la figure 1 est une vue schématique en perspective d'un mitigeur thermostatique conforme à l'invention ;
- la figure 2 est une coupe longitudinale du mitigeur, selon le plan II de la figure 1 ;
- la figure 3 est une coupe transversale du mitigeur selon la ligne III-III de la figure 2 ;
- la figure 4 est une coupe longitudinale partielle du mitigeur selon la ligne IV-IV de la figure 3 ; et
- la figure 5 est une vue éclatée en perspective, sous le même angle d'observation que la figure 1, du mitigeur.

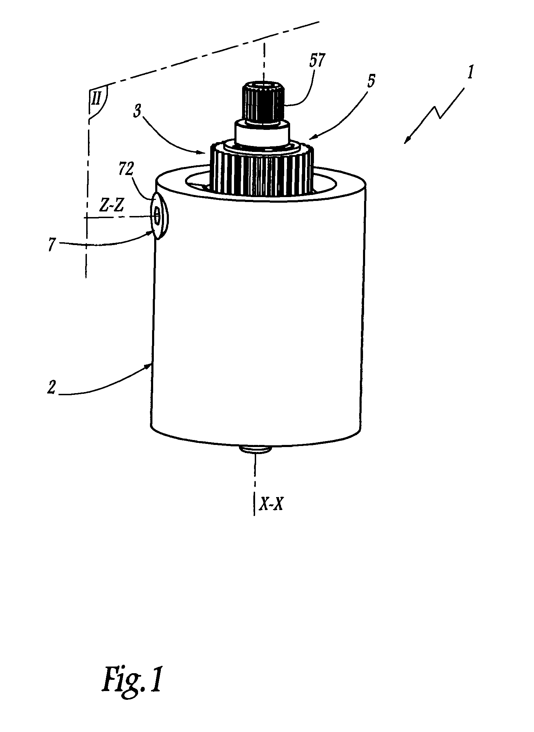

Sur les figures 1 à 5 est représenté un mitigeur thermostatique 1 destiné à équiper, par exemple, une robinetterie sanitaire, telle qu'un robinet de lavabo ou de douche.

Le mitigeur 1 comporte, en tant que composant externe principal, un corps de mitigeur 2 de forme tubulaire, s'étendant en longueur autour d'un axe central X-X. Dans l'exemple considéré aux figures, le corps de mitigeur présente une section à profil circulaire, centrée sur l'axe X-X, et est ouvert à ses deux extrémités longitudinales. Par commodité, la suite de la description est orientée par rapport au corps de mitigeur 2, de sorte que le terme « intérieur » désigne une direction dirigée vers l'axe X-X, tandis que le terme « extérieur » désigne une direction de sens opposé. De même, les termes « haut » et « supérieur » désignent une direction dirigée, selon l'axe X-X, vers l'une des extrémités longitudinales du corps du mitigeur, à savoir l'extrémité dirigée vers la partie haute des figures 1, 2, 4 et 5, tandis que les termes « bas » et « inférieur » désignent une direction de sens opposé.

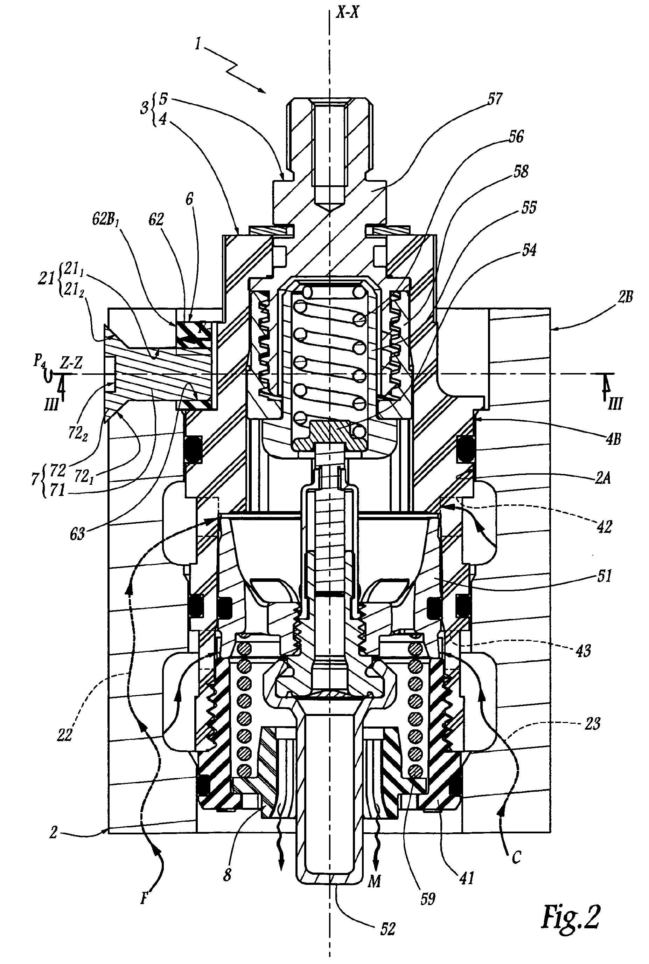

Comme bien visible sur les figures 2, 3 et 5, la partie haute du corps de mitigeur 2 est traversée de part en part par un trou alésé 21, reliant l'une à l'autre la face intérieure 2A et la face extérieure 2B du corps de mitigeur. Du côté intérieur du trou 21, ce dernier est délimité par une surface cylindrique 21₁, à base circulaire et centrée sur un axe Z-Z radial à l'axe X-X, tandis que, du côté extérieur du trou, ce dernier est délimité par une surface tronconique 21₂, centré sur l'axe Z-Z et s'évasant vers l'extérieur depuis la surface cylindrique 21₁.

Le mitigeur thermostatique 1 comporte également une cartouche thermostatique 3 qui, dans la configuration assemblée du mitigeur, est logée pour l'essentiel à l'intérieur du corps de mitigeur 2.

La cartouche 3 comporte, en tant que composant externe principal, une enveloppe 4 en matière plastique. L'enveloppe 4 présente une forme tubulaire et s'étend en longueur autour d'un axe central sensiblement confondu avec l'axe X-X lorsque la cartouche 3 est assemblée au corps de mitigeur 2. A son extrémité inférieure, l'enveloppe 4 est munie fixement, ici par vissage, d'une douille co-axiale 41 qui prolonge l'enveloppe vers le bas. Dans l'exemple de réalisation considéré aux figures, le reste de l'enveloppe 4 est monobloc, étant entendu que, en variante non représentée, cet enveloppe peut être constituée de plusieurs parties solidarisées fixement les uns aux autres, par tout moyen approprié, de la même manière que la douille 41 est solidarisée fixement à l'enveloppe 4.

Dans la configuration assemblée du mitigeur 1, l'enveloppe 4, y compris sa douille 41, est montée étanche à l'intérieur du corps du mitigeur 2, avec interposition radiale de joints d'étanchéité entre la face extérieure 4B de l'enveloppe et la face intérieure 2A du corps du mitigeur, étant noté que ces faces 4B et 2A sont sensiblement ajustées l'une à l'autre au moins de part et d'autre de ces joints.

La cartouche thermostatique 3 permet de réguler la température de l'eau M sortant de la cartouche et obtenue par mélange d'eau chaude entrante C et d'eau froide entrante F. Pour ce faire, de manière connue en soi et comme décrit en détail dans FR-A-2 774 740 au nom de la présente Demanderesse, la cartouche 3 comporte des moyens thermostatiques ad hoc 5 agencés à l'intérieur de l'enveloppe 4.

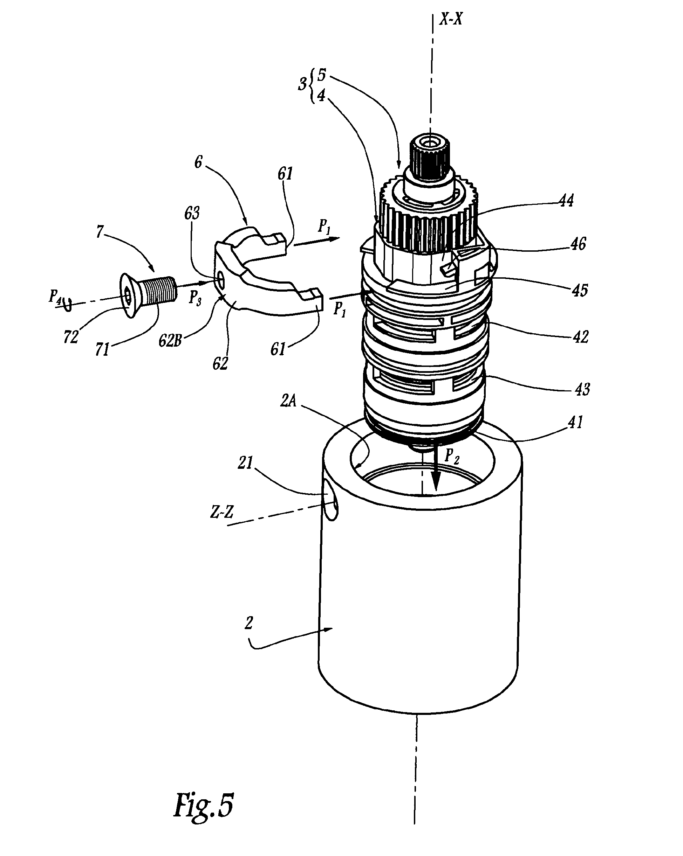

Comme bien visible sur la figure 2, ces moyens 5 comportent un tiroir de régulation 51 monté de manière mobile suivant l'axe X-X entre deux positions extrêmes, dans lesquelles il obture respectivement l'admission d'eau chaude et l'admission d'eau froide à l'intérieur du tiroir. Dans les deux positions extrêmes précitées, les extrémités axiales opposées du tiroir 51 sont appuyées contre des sièges correspondants, respectivement délimités par l'enveloppe 4 et la douille 41. L'eau froide F et l'eau chaude C atteignent le tiroir en traversant radialement l'enveloppe 4 qui délimite à cet effet deux séries respectives de lumières périphériques 42 et 43, visibles en partie sur la figure 5 et indiquées en pointillés sur la figure 2. Ces lumières 42 et 43 sont respectivement alimentées en eau froide et en eau chaude, depuis l'extérieur de l'enveloppe 4, par des passages ascendants 22 et 23, délimités, de manière connue en soi, par le corps du mitigeur 2 et indiqués uniquement en pointillés et de manière schématique sur la figure 2. Selon la position du tiroir 51 par rapport à l'enveloppe 4, les quantités d'eau froide F et d'eau chaude C admises à l'intérieur du tiroir sont régulées, leur mélange formant l'eau sortante M.

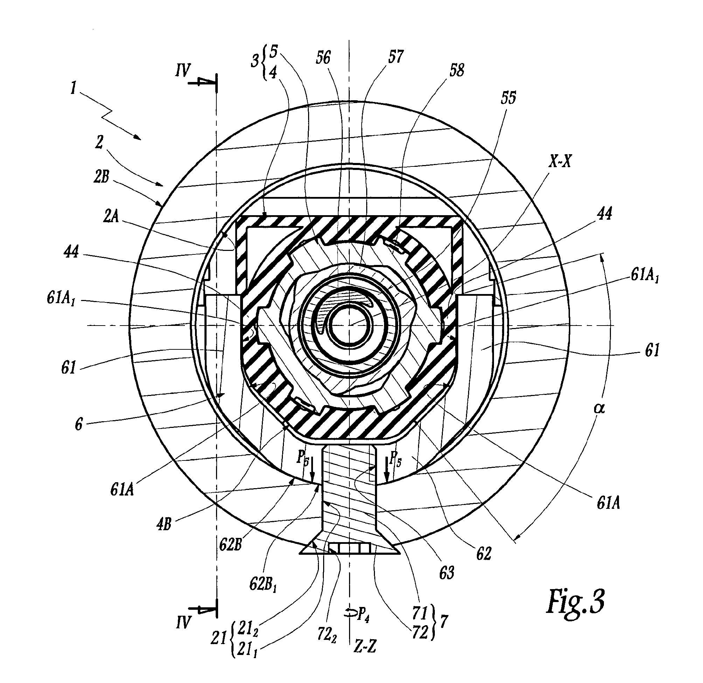

La position du tiroir 51 est commandée par un élément thermostatique dont le corps 52, centré sur l'axe X-X, est solidarisé fixement au tiroir 51. Ce corps 52 contient une matière thermodilatable qui, sous l'action de la chaleur de l'eau mitigée M dans laquelle baigne ce corps, se dilate et provoque le déplacement relatif, en translation suivant l'axe X-X, d'un piston 53 centré sur l'axe X-X. L'extrémité du piston 53, opposée au corps 52, est appuyée contre une butée 54 montée coulissante, suivant l'axe X-X, à l'intérieur d'une douille 55, avec interposition axiale d'un ressort 56 de surcourse du piston. La position axiale de la douille 55 à l'intérieur de l'enveloppe 4, et par là l'altitude de la butée de piston 54, sont réglables par une vis de réglage 57, qui est centrée sur l'axe X-X et dont l'extrémité supérieure est cannelée de manière à pouvoir être liée en rotation à une manette de manoeuvre, non représentée sur les figures. A son extrémité inférieure, la vis de réglage 57 est filetée de manière à coopérer avec un écrou complémentaire 58, centré sur l'axe X-X, lié en rotation autour de cet axe à l'enveloppe 4 par des cannelures bien visibles à la figure 3, et appuyé axialement vers le bas contre la douille 55. Ainsi, lorsque la vis 57 est entraînée en rotation sur elle-même autour de l'axe X-X, l'écrou 58 se translate suivant cet axe, ce qui provoque l'entraînement correspondant de la douille 55, étant remarqué que les moyens thermostatiques 5 sont complétés par un ressort de rappel 59, qui agit sur le tiroir 51 de manière opposée au déploiement du piston 53 par rapport au corps 52 de l'élément thermostatique et qui est axialement interposé entre ce tiroir et la douille d'extrémité 41 de l'enveloppe 4.

La structure et le fonctionnement des moyens thermostatiques 5 ne sont pas décrits ici plus avant, étant entendu que le lecteur pourra se reporter à FR-A-2 774 740 à cette fin.

Pour immobiliser l'enveloppe 4 de la cartouche 3 par rapport au corps de mitigeur 2, le mitigeur 1 comporte une pièce de fixation 6 et une vis 7 d'assemblage de cette pièce au corps de mitigeur. Comme bien visible sur la figure 5, la pièce 6 se présente sous la forme d'une fourche monobloc, comportant deux branches parallèles 61 reliées l'une à l'autre, à une de leurs extrémités longitudinales, par un pont 62. La pièce 6 est destinée à être interposée entre le corps de mitigeur 2 et l'enveloppe 4, de manière que son pont 62 soit traversé par l'axe Z-Z et que ses branches 61 s'étendent en longueur de manière parallèle à l'axe Z-Z, de part et d'autre de l'axe X-X. En coupe transversale à cet axe X-X, la pièce 6 présente ainsi une section en U, comme bien visible sur la figure 3.

La pièce 6 est conformée pour être portée mécaniquement par l'enveloppe 4 et être liée cinématiquement à cette dernière à la fois suivant l'axe X-X et en rotation autour de cet axe. A cet effet, la face intérieure 61 A de chaque branche 61 délimite une surface plane 61A₁, parallèle au plan contenant les axes X-X et Z-Z. Comme représenté sur la figure 3, cette surface 61A₁ est appliquée contre des méplats extérieurs complémentaires 44 de l'enveloppe 4, diamétralement opposés par rapport à l'axe X-X. Le contact plan-plan entre chacune des surfaces 61A₁ et le méplat correspondant 44 lie efficacement en rotation autour de l'axe X-X l'enveloppe 4 et la pièce 6.

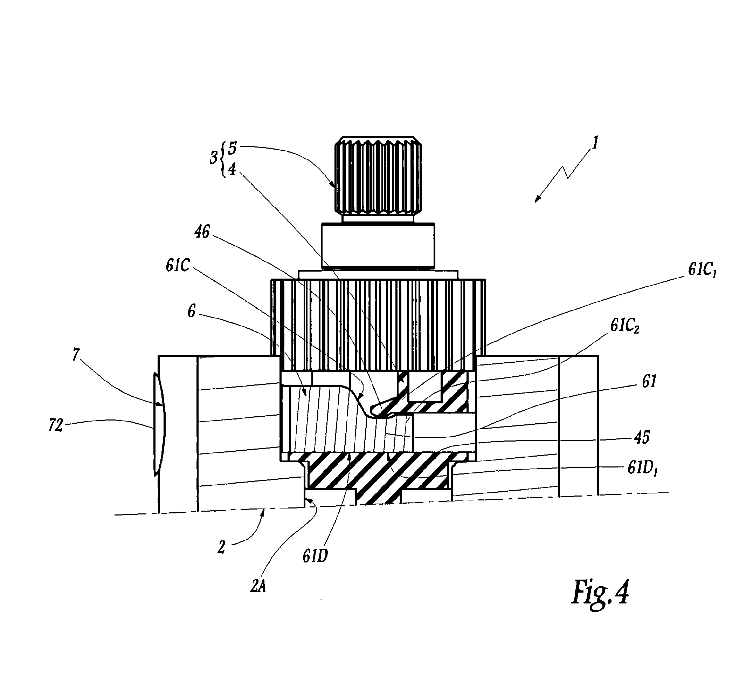

En outre, la face inférieure 61 D de chaque branche 61 délimite une surface plane 61 D₁ s'étendant dans un plan perpendiculaire à l'axe X-X. Cette surface 61 D₁ est appliquée axialement vers le bas contre une partie épaulée complémentaire 45 de l'enveloppe 4, comme bien visible sur la figure 4. Le contact plan-plan entre les surfaces 61D₁ et les parties épaulées 45 lie efficacement, suivant la direction de l'axe X-X et vers le bas, l'enveloppe 4 et la pièce 6.

De plus, la face supérieure 61C de chaque branche 61 délimite une surface 61C₁ d'appui vers le bas d'une palette résiliente 46 de l'enveloppe 4. Cette palette 46 est venue de matière avec le reste de l'enveloppe de manière élastiquement déformable, de sorte que, en l'absence de la branche 61, la palette 46 s'étend depuis le reste de l'enveloppe en direction de la partie épaulée 45 correspondante, en ménageant entre elles une distance axiale légèrement inférieure à l'épaisseur, c'est-à-dire à la dimension suivant la direction de l'axe X-X, de la branche 61 entre ses surfaces 61C₁ et 61D₁. On comprend ainsi que, en présence de la branche 61, chaque palette 46 s'appuie axialement contre la surface 61C₁, ce qui lie suivant l'axe X-X et vers le haut l'enveloppe 4 et la pièce 6, et maintient, par effet résilient, la surface 61D₁ en appui contre la partie épaulée 45 correspondante.

Par ailleurs, la coopération entre les faces intérieure 61A, supérieure 61C et inférieure 61 D des branches 61 et les parties 44, 45 et 46 de l'enveloppe 4 permettent à la pièce 6 d'être mobile suivant l'axe Z-Z par rapport à l'enveloppe 4, par glissement. Avantageusement, pour permettre à la pièce 6 d'être ainsi portée de manière mobile par l'enveloppe 4, tout en empêchant son dégagement accidentel par inclinaison de la cartouche 3 vis-à-vis de la verticale, la face supérieure 61C de chaque branche 61 délimite, à son extrémité libre, un talon 61C₂ saillant vers le haut par rapport au niveau de la surface 61C₁. En butant suivant la direction de l'axe Z-Z contre la palette correspondante 46, ce talon 61C₂ bloque la pièce 6 vers l'extérieur et empêche son dégagement.

Le pont 62 de la pièce 6 délimite un taraudage 63 centré sur l'axe Z-Z et traversant le pont de part en part.

La vis 7 comporte une tige filetée 71, dont le filetage est complémentaire du taraudage 63 et qui présente un diamètre maximal égal ou légèrement inférieur au diamètre intérieur de la surface 21₁ du trou 21. La vis 7 comporte également, à une extrémité longitudinale de sa tige 71, une tête fraisée 72 plus large que la tige 71. Sur son côté dirigé vers la tige 71, la tête 72 délimite une surface tronconique 72₁ complémentaire de la surface 21₂ du trou 21. Sur son côté opposé, la tête délimite une empreinte polygonale 72₂ destinée à recevoir la tête d'un outil d'entraînement de la vis en rotation sur elle-même.

La fabrication du mitigeur thermostatique 1 est la suivante.

Initialement, on dispose des composants du mitigeur 1 dans une configuration analogue à celle illustrée à la figure 5. On dispose ainsi du corps de mitigeur 2, de la cartouche 3 sous forme d'un ensemble pré-assemblé et manipulable d'un seul tenant, de la pièce 6 et de la vis 7.

Dans un premier temps, on assemble la pièce 6 à la cartouche 3, en positionnant ses branches 61 de part et d'autres des méplats 44 et en les introduisant entre les parties épaulées 45 et les palettes 46, comme indiqué par les flèches P₁ sur la figure 5, jusqu'à ce que les talons 61C₂ dépassent les palettes 46 suivant la direction de l'axe Z-Z. Avant ou après avoir ainsi rapporté la pièce 6 à la cartouche 3, une manette de réglage de température, non représentée, est avantageusement fixée à l'extrémité supérieure cannelée de la vis de réglage 57 : comme la pièce 6 est liée en rotation à l'enveloppe 4, cette pièce forme un repère d'indexation angulaire autour de l'axe X-X, permettant d'assembler rapidement et précisément la manette précitée à la cartouche 3.

Dans un deuxième temps, la cartouche 3, éventuellement munie de la manette de réglage de température, et la pièce 6 portée par la cartouche sont introduites à l'intérieur du corps du mitigeur 2, globalement suivant l'axe X-X, par exemple en passant par l'extrémité supérieure du corps du mitigeur, comme indiqué par la flèche P₂ sur la figure 5. La cartouche est alors mise en place dans le corps du mitigeur de manière que le trou 21 débouche intérieurement de manière coaxiale dans le taraudage 63. On comprend ainsi que, comme la pièce 6 est liée en rotation à l'enveloppe 4, cette pièce indexe angulairement autour de l'axe X-X la cartouche 3 à l'intérieur du corps du mitigeur 2.

Dans cette configuration, l'ajustement de la face intérieure 2A du corps de mitigeur 2 et de la face extérieure 4B de l'enveloppe 4, au moins au niveau des joints d'étanchéité interposés entre eux, immobilise l'enveloppe par rapport au corps de mitigeur dans toutes les directions radiales à l'axe X-X, notamment selon l'axe Z-Z.

Dans un troisième temps, on introduit la tige 71, depuis l'extérieur du corps du mitigeur 2, dans le trou 21, comme indiqué par la flèche P₃ sur la figure 5. Puis, en entraînant en rotation sur elle-même la vis 7, comme indiqué par la flèche P₄ sur les figures 2, 3 et 5, on met en prise le filetage de la tige 71 dans le taraudage 63. Ce vissage conduit à mettre en butée la tête 72 contre la face extérieure 2B du corps de mitigeur 2, par engagement complémentaire des surfaces 72₁ et 21₂. En poursuivant alors le vissage de la vis 7, la tige 71 entraîne le taraudage 63, et par là toute la pièce 6, suivant un mouvement de translation le long de l'axe Z-Z, s'éloignant de l'axe X-X. La pièce 6 glisse alors, suivant la direction de l'axe Z-Z, contre les méplats 44 sur son côté intérieur, contre les parties épaulées 45 sur son côté inférieur, et contre les palettes 46 sur son côté supérieur. La face extérieure 62B est ainsi déplacée en direction de la face intérieure 2A du corps du mitigeur, jusqu'à ce qu'une surface 62A₁ délimitée par cette face 62A soit plaquée fermement contre la face 2A, comme indiqué par les flèches P₅ sur les figures 2 et 3. En d'autres termes, la paroi du corps du mitigeur 2 entourant le trou 21 est alors enserrée, suivant l'axe Z-Z, entre le pont 62 de la pièce 6 et la tête 72 de la vis 7. Le corps de mitigeur 2 et la pièce 6 se trouvent alors liés rigidement l'un à l'autre, comme représenté sur les figures 1 à 4, immobilisant ainsi l'enveloppe 4 à l'intérieur du corps de mitigeur dans toutes les directions.

Cette liaison rigide entre la pièce 6 et le corps de mitigeur 2 est avantageusement telle que, combinée à la structure rigide de cette pièce, cette dernière participe au blocage de l'enveloppe 4 de la cartouche 3 en rotation autour de l'axe perpendiculaire à la fois à l'axe X-X et à l'axe Z-Z. L'immobilisation de la cartouche 3 à l'intérieur du corps du mitigeur 2 est ainsi renforcée.

Lors du fonctionnement du mitigeur 1, les phénomènes de pression statique et dynamique à l'intérieur du corps de mitigeur 2, qui agissent globalement suivant l'axe X-X et vers le haut, c'est-à-dire qui tendent à ressortir vers le haut la cartouche 3 vis-à-vis du corps de mitigeur, sont répartis par la pièce 6 au niveau du contact entre les surfaces 61 D₁ et les parties épaulées 45, c'est-à-dire au niveau d'une zone de contact étendue puisque chacune de ces surfaces 61 D₁ coopère avec la partie d'enveloppe 45 sur un secteur angulaire α, centré sur l'axe X-X, d'au moins 20°, comme indiqué sur la figure 3. De la sorte, le mitigeur 1 supporte des conditions de fonctionnement sévères, sans endommagement ni de l'enveloppe 4, ni de sa liaison fixe avec le corps de mitigeur 2.

Si la cartouche 3 doit être changée, il suffit d'enlever la vis 7 par dévissage et de remplacer, d'un seul tenant, la cartouche, éventuellement équipée de la manette de réglage de température. Une nouvelle cartouche est ensuite mise en place, aussi facilement et rapidement que la cartouche d'origine. Ainsi, la maintenance du mitigeur 1 ne nécessite pas de réglages longs et compliqués et ne demande ni un outillage spécial, ni une formation spécifique du personnel concerné.

Divers aménagements et variantes au mitigeur thermostatique 1 décrit ci-dessus, ainsi qu'à son procédé de fabrication, sont par ailleurs envisageables. A titre d'exemples :
- la présence de la pièce de fixation 6 et de la vis 7 n'induit aucune contrainte significative vis-à-vis de la cartouche thermostatique 3, de sorte que cette dernière peut intégrer des aménagements connus ; par exemple, un turbulateur 8 peut être prévu autour du corps 52 de l'élément thermostatique (voir la figure 2) ;
- la géométrie du corps de mitigeur 2 n'est pas limitée à une géométrie cylindrique, dans le sens où, de manière générale, une forme creuse et allongée, qui ménage une face intérieure 2A permettant l'appui rigide de la pièce 6 et la réception localement ajustée de l'enveloppe 4, est suffisante ; en particulier, la face extérieure 2B du corps de mitigeur peut présenter des géométries très diverses, selon notamment l'esthétique de la robinetterie à laquelle appartient ce corps de mitigeur ;
- une variante non représentée des palettes élastiques 46 consiste à remplacer chacune de ces palettes par un renflement rigide, dimensionné pour franchir en force une surépaisseur locale de la face supérieure 61C de la branche correspondante 61 lorsque cette dernière est assemblée à l'enveloppe 4 ; le franchissement de cette surépaisseur, analogue au talon 61C₂, constitue ainsi un «point dur », dont le franchissement lors de l'assemblage de la pièce limite significativement les risques de dégagement ultérieur de cette pièce ;

- une alternative, non représentée, d'un aménagement de la face intérieure de la pièce 6, en vue de bloquer en rotation cette pièce par rapport à l'enveloppe 4, consiste à munir fixement l'enveloppe d'un ergot en saillie depuis sa face extérieure 4B, qui est reçu dans un logement complémentaire délimité dans la face intérieure du pont 62 lorsque la pièce 6 est assemblée à la cartouche 3 ; et/ou
- d'autres formes que celle d'une fourche sont possibles pour la pièce de la fixation 6 ; en particulier, cette pièce peut présenter une forme d'anneau ou de rondelle et, plus généralement, une structure rigide qui présente un taraudage analogue au taraudage 63 et qui s'étend suivant la direction de l'axe Z-Z au moins d'un côté de l'axe X-X.

## Revendications

1. Mitigeur thermostatique (1), comportant :
- un corps de mitigeur (2) globalement tubulaire,
- une cartouche thermostatique (3), qui constitue un ensemble pré-assemblé rapporté à l'intérieur du corps de mitigeur et qui comprend une enveloppe creuse (4) en matière plastique, dans laquelle sont agencés des moyens thermostatiques (5) de régulation de la température d'un fluide (M) sortant de la cartouche, obtenu par mélange d'un fluide entrant froid (F) et d'un fluide entrant chaud (C), et
- des moyens (6, 7) de fixation de l'enveloppe au corps de mitigeur,
les moyens de fixation comprenant, d'une part, une vis (7), munie d'une tige filetée (71) et d'une tête d'extrémité élargie (72), et, d'autre part, une pièce rigide (6), qui est interposée entre le corps de mitigeur (2) et l'enveloppe (4) de manière mobile suivant un axe de déplacement (Z-Z) transversal à l'axe longitudinal (X-X) du corps de mitigeur, en étant liée cinématiquement à l'enveloppe à la fois suivant la direction de l'axe du corps de mitigeur et en rotation autour de cet axe, et qui est munie d'un taraudage (63) centré sur l'axe de déplacement, qui débouche sur une face (62B) de la pièce rigide, tournée vers le corps de mitigeur, et qui est apte à coopérer par vissage avec la tige filetée (71) pour déplacer la pièce rigide jusqu'à plaquer une surface d'appui (62B₁) de cette face contre la face intérieure (2A) du corps de mitigeur lorsque la vis (7) est introduite, depuis l'extérieur du corps de mitigeur, à travers un trou traversant transversal (21) du corps de mitigeur, plus petit que la tête (72) de la vis.

2. Mitigeur suivant la revendication 1, **caractérisé en ce que** la pièce rigide (6) est apte à être assemblée et portée par l'enveloppe (4) avant de rapporter la cartouche (3) à l'intérieur du corps de mitigeur (2).

3. Mitigeur suivant l'une des revendications 1 ou 2, **caractérisé en ce qu'**il comporte en outre une manette de réglage de température, rapportée fixement aux moyens thermostatiques (5), et **en ce que** la pièce rigide (6) est apte à être assemblée et portée par l'enveloppe (4) avant de rapporter la manette de réglage de température à la cartouche (3).

4. Mitigeur suivant l'une quelconque des revendications précédentes, **caractérisé en ce que** la pièce rigide (6) délimite, sur sa face (61A) opposée à la face intérieure (2A) du corps de mitigeur (2), au moins une surface (61A₁) d'appui contre une partie correspondante (44) de l'enveloppe (4), cette surface d'appui étant adaptée, à la fois, pour lier la pièce rigide à l'enveloppe en rotation autour de l'axe longitudinal (X-X) du corps de mitigeur et pour glisser contre ladite partie correspondante de l'enveloppe suivant la direction de l'axe de déplacement (Z-Z).

5. Mitigeur suivant l'une quelconque des revendications précédentes, **caractérisé en ce que** la pièce rigide (6) délimite, sur chacune de ses deux faces (61C, 61 D) opposées suivant la direction de l'axe longitudinal (X-X) du corps de mitigeur (2), au moins une surface (61C₁, 61D₁) d'appui contre une partie correspondante (46, 45) de l'enveloppe (4), cette surface d'appui étant adaptée, à la fois, pour lier la pièce rigide à l'enveloppe suivant la direction de l'axe longitudinal (X-X) du corps de mitigeur et pour glisser contre ladite partie correspondante de l'enveloppe suivant la direction de l'axe de déplacement (Z-Z).

6. Mitigeur suivant la revendication 5, **caractérisé en ce que** la ou les surfaces d'appui (61D₁) délimitées par l'une (61 D) desdites deux faces opposées (61C, 61 D) de la pièce rigide (6), coopèrent avec la partie correspondante (45) de l'enveloppe (4) sur une étendue angulaire (α, α), autour de l'axe longitudinal (X-X) du corps de mitigeur (2), d'au moins 40°.

7. Mitigeur suivant l'une des revendications 5 ou 6, **caractérisé en ce que** l'une (46) desdites parties correspondantes (45, 46) de l'enveloppe (4) est déformable par rapport au reste de l'enveloppe, de manière à être appliquée sur la ou les surfaces d'appui correspondantes (61C₁) avec une contrainte selon la direction de l'axe longitudinal (X-X) du corps de mitigeur (2).

8. Mitigeur suivant l'une quelconque des revendications précédentes, **caractérisé en ce que** la pièce rigide (6) est munie de moyens de blocage (61C₂) adaptés pour, en l'absence du corps de mitigeur (2), retenir la pièce rigide vis-à-vis de l'enveloppe (4) suivant la direction de l'axe de déplacement (Z-Z).

9. Mitigeur suivant l'une quelconque des revendications précédentes, **caractérisé en ce que** la pièce rigide (6) présente une forme globale de fourche, avec deux branches parallèles (61), qui s'étendent en longueur suivant la direction de l'axe de déplacement (Z-Z), et un pont (62) qui relie les deux branches l'une à l'autre à l'une de leurs extrémités longitudinales et qui est muni du taraudage (63) et de la surface d'appui (62B₁) contre la face intérieure (2A) du corps de mitigeur (2).

10. Procédé de fabrication d'un mitigeur thermostatique (1), dans lequel on dispose :
- d'un corps de mitigeur (2) globalement tubulaire, et
- d'une cartouche thermostatique (3), qui constitue un ensemble pré-assemblé et qui comprend une enveloppe creuse (4) en matière plastique, dans laquelle sont agencés des moyens thermostatiques (5) de régulation de la température d'un fluide (M) sortant de la cartouche, obtenu par mélange d'un fluide entrant froid (F) et d'un fluide entrant chaud (C), une pièce rigide (6) étant interposée entre le corps de mitigeur (2) et l'enveloppe (4) rapportée à l'intérieur de ce dernier, de manière mobile suivant un axe de déplacement (Z-Z) transversal à l'axe longitudinal (X-X) du corps de mitigeur, tout en liant cinématiquement cette pièce rigide à l'enveloppe, à la fois, suivant la direction de l'axe du corps de mitigeur et en rotation autour de cet axe,
et une vis (7) étant introduite ensuite à l'intérieur du corps de mitigeur (2), à travers un trou traversant transversal (21) du corps de mitigeur, plus petit qu'une tête (72) de cette vis, et une tige filetée (71) de la vis étant vissée dans un taraudage (63) de la pièce rigide (6), centré sur l'axe de déplacement (Z-Z) et débouchant sur une face (62B) de cette pièce tournée vers le corps de mitigeur, jusqu'à plaquer une surface d'appui (62B₁) de cette face contre la face intérieure (2A) du corps de mitigeur.

## Claims

1. A thermostatic single-unit mixer (1), comprising:
- a mixer casing (2) of tubular overall shape,
- a thermostatic cartridge (3), which constitutes a preassembled assembly attached inside the mixer casing and which comprises a hollow shell (4) made of plastic, accommodating thermostatic means (5) for regulating the temperature of a fluid (M) leaving the cartridge and being obtained by mixing a cold incoming fluid (F) with a hot incoming fluid (C), and
- attachment means (6, 7) for attaching the shell to the mixer casing,
the attachment means comprising, firstly, a screw (7) provided with a threaded shank (71) and with a widened end head (72), and, secondly, a rigid component (6) which is interposed between the mixer casing (2) and the shell (4) such that this rigid component can move along an axis of movement (Z-Z) transverse to the longitudinal axis (X-X) of the mixer casing, this rigid component being kinematically linked to the shell both in the direction of the axis of the mixer casing and in terms of rotation about this axis, and which is equipped with a tapping (63) which is centered on the axis of movement, which opens onto one face (62B) of the rigid component, which faces toward the mixer casing, and which is able to engage by screw fastening with the threaded shank (71) in order to move the rigid component until a bearing surface (62B₁) of this face is pressed firmly against the interior face (2A) of the mixer casing when the screw (7) is introduced, from outside the mixer casing, through a transverse through-hole (21) of the mixer casing, this through-hole being smaller than the head (72) of the screw.

2. The single-unit mixer as claimed in claim 1, **characterized in that** the rigid component (6) is adapted to be assembled and carried by the shell (4) before the cartridge (3) is attached inside the mixer casing (2).

3. The single-unit mixer as claimed in one of claims 1 and 2, **characterized in that** the single-unit mixer further comprises a temperature-regulating knob, attached fixedly to the thermostatic means (5), and **in that** the rigid component (6) can be assembled and carried by the shell (4) before the temperature-regulating knob is attached to the cartridge (3).

4. The single-unit mixer as claimed in any one of the preceding claims, **characterized in that** the rigid component (6) delimits on its opposite face (61A) to the interior face (2A) of the mixer casing (2), at least one bearing surface (61A₁) for bearing against a corresponding part (44) of the shell (4), said at least one bearing surface being designed both to connect the rigid component to the shell in terms of rotation about the longitudinal axis (X-X) of the mixer casing and to slide against said corresponding part of the shell in the direction of the axis of movement (Z-Z).

5. The single-unit mixer as claimed in any one of the preceding claims, **characterized in that** the rigid component (6) delimits, on each of its two opposite faces (61C, 61D) in the direction of the longitudinal axis (X-X) of the mixer casing (2), at least one bearing surface (61C₁, 61D₁) for bearing against a corresponding part (46, 45) of the shell (4), said at least one bearing surface being designed both to connect the rigid component to the shell in the direction of the longitudinal axis (X-X) of the mixer casing and to slide against said corresponding part of the shell in the direction of the axis of movement (Z-Z).

6. The single-unit mixer as claimed in claim 5, **characterized in that** the at least one bearing surface surface (61D₁) delimited by one (61D) of said two opposite faces (61C, 61D) of the rigid component (6) collaborate with the corresponding part (45) of the shell (4) over an angular expanse (α) of at least 40° about the longitudinal axis (X-X) of the mixer casing (2).

7. The single-unit mixer as claimed in one of claims 5 and 6, **characterized in that** one (46) of said corresponding parts (45, 46) of the shell (4) is deformable with respect to the rest of the shell, so that it can be pressed against the at least one bearing surface (61C₁) with pre-load in the direction of the longitudinal axis (X-X) of the mixer casing (2).

8. The single-unit mixer as claimed in any one of the preceding claims, **characterized in that** the rigid component (6) is equipped with locking means (61C₂) designed to retain the rigid component with respect to the shell (4) in the direction of the axis of movement (Z-Z) in the absence of the mixer casing (2).

9. The single-unit mixer as claimed in any one of the preceding claims, **characterized in that** the rigid component (6) has a forked overall shape, with two parallel branches (61) running lengthways in the direction of the axis of movement (Z-Z) and a bridging piece (62) which connects the two branches together at one of their longitudinal ends and which is equipped with the tapping (63) and with the bearing surface (62B₁) for bearing against the interior face (2A) of the mixer casing (2).

10. A method of manufacturing a thermostatic single-unit mixer (1) in which are provided :
- a mixer casing (2) of tubular overall shape, and
- a thermostatic cartridge (3), which constitutes a preassembled assembly and which comprises a hollow shell (4) made of plastic, accommodating thermostatic means (5) for regulating the temperature of a fluid (M) leaving the cartridge obtained by mixing a cold incoming fluid (F) with a hot incoming fluid (C),
a rigid component (6) being interposed between the mixer casing (2) and the shell (4), being attached inside the latter, so as to be able to move along an axis of movement (Z-Z) transverse to the longitudinal axis (X-X) of the mixer casing, while at the same time kinematically connecting this rigid component to the shell both in the direction of the axis of the mixer casing and in terms of rotation about this axis,
and a screw (7) being then introduced into the mixer casing (2), through a transverse through-hole (21) of the mixer casing, this through-hole being smaller than a head (72) of this screw, and a threaded shank (71) of the screw being screwed into a tapping (63) in the rigid component (6), which is centered on the axis of movement (Z-Z) and which opens onto a face (62B) of this component that faces toward the mixer casing, until a bearing surface (62B₁) of this face is pressed firmly against the interior face (2A) of the mixer casing.

## Patentansprüche

1. Thermostatmischer (1) umfassend:
- einen im Wesentlichen rohrförmigen Mischerkörper (2),
- eine Thermostatkartusche (3), die eine vorzusammengesetzte Anordnung bildet und in das Innere des Mischerkörpers eingesetzt ist und die eine hohle Hülle (4) aus Kunststoff umfasst, in der Thermostatmittel (5) angeordnet sind zum Einstellen der Temperatur einer Flüssigkeit (M), die aus der Kartusche austritt und die durch Mischung einer kalten eintretenden Flüssigkeit (F) und einer warm eintretenden Flüssigkeit (C) erhalten wird, und
- Mittel (6, 7) zur Befestigung der Hülle am Mischorkörper,
wobei die Befestigungsmittel einerseits eine mit einem Gewindeschaft (71) und einem vergrößerten Kopf (72) am Ende ausgerüsteten Schraube (7) und andererseits ein starres Stück (6) umfassen, das zwischen dem Mischerkörper (2) und der Hülle (4) in beweglicher Weise gemäß einer Verschiebungsachse (Z-Z) quer zur Längsachse (X-X) des Mischerkörpers angeordnet ist, indem es kinema tisch mit der Hülle sowohl gemäß der Richtung der Achse des Mischerkörpers als auch in Drehung um diese Achse verbunden ist und das mit einer Gewindebohrung (63) ausgerüstet ist, die auf die Verschiebungsachse zentriert ist und an einer zum Mischerkörper gerichteten Fläche (62B) des starren Stücks mündet und die angepasst ist, durch Schraubung mit dem Gewindeschaft (71) zusammenzuarbeiten, um das starre Stück zu verschieben bis eine Anlagefläche (62B₁) dieser Fläche gegen die Innenfläche (2A) des Mischerkörpers anstößt, wenn die Schraube (7) von dem Äußeren des Mischerkörpers durch ein Loch (21) hindurch, das quer durch den Mischerkörper hindurchgeht und kleiner als der Kopf (72) der Schraube ist, eingeführt wird.

2. Mischer nach Anspruch 1, **dadurch gekennzeichnet, dass** das starre Stück (6) geeignet ist, zusammengesetzt und von der Hülle (4) getragen zu werden bevor die Kartusche (3) in das Innere des Mischerkörpers (2) eingebracht wird.

3. Mischer nach einem der Ansprüche 1 oder 2, **dadurch gekennzeichnet, dass** er außerdem einen Hebel zur Einstellung der Temperatur aufweist, der fest an den thermostatischen Mitteln (5) angebracht ist, und dass das starre Stück (6) geeignet ist, zusammengesetzt und von der Hülle (4) getragen zu werden, bevor der Temperatureinstellhebel an der Kartusche (3) angebracht wird.

4. Mischer nach einem beliebigen der vorhergehenden Ansprüche, **dadurch gekennzeichnet, dass** das starre Stück (6) auf seiner Fläche (61A) gegenüberliegend zur Innenfläche (2A) des Mischerkörpers (2) mindestens eine Auflagefläche (61A₁) gegen einen korrespondierenden Bereich (44) der Hülle (4) begrenzt, wobei die Auflagefläche angepasst ist, sowohl das starre Teil mit der Hülle in Drehung um die Längsachse (X-X) des Mischerkörpers zu verbinden als auch an dem korrespondierenden Bereich der Hülle gemäß einer Richtung der Verschiebungsache (Z-Z) zu gleiten.

5. Mischer nach einem beliebigen der vorhergehenden Ansprüche, **dadurch gekennzeichnet, dass** das starre Stück (6) auf jeder seiner zwei gegenüberliegenden Flächen (61C, 61D) gemäß der Längsachse (X-X) des Mischerkörpers (2) mindestens eine Auflagefläche (61C₁, 61D₁) gegen einen korrespondierenden Bereich (46, 45) der Hülle (4) begrenzt, wobei die Auflagefläche angepasst ist, sowohl das starre Stück mit der Hülle gemäß der Richtung der Längsachse (X-X) des Mischerkörpers zu verbinden als auch an dem korrespondierenden Bereich der Hülle gemäß der Richtung der Verschiebungsachse (Z-Z) zu gleiten.

6. Mischer nach Anspruch 5, **dadurch gekennzeichnet, dass** die Auflagefläche(n) (61D₁), die durch eine (61D) der zwei gegenüberliegenden Flächen (61C, 61D) des starren Stücks (6) begrenzt sind, mit dem korrespondierenden Bereich (45) der Hülle (4) über eine Winkelerstreckung (α, α) um die Längsachse (X-X) des Mischerkörpers (2) von mindestens 40° zusammenarbeiten.

7. Mischer nach Anspruch 5 oder 6, **dadurch gekennzeichnet, dass** einer (46) der korrespondierenden Bereiche (45, 46) der Hülle (4) in Bezug auf den Rest der Hülle deformierbar ist, derart, dass er an die korrespondierende(n) Auflagefläche(n) (61C₁) mit einer Vorspannung gemäß der Richtung der Längsachse (X-X) des Mischerkörpers (2) angebracht wird.

8. Mischer nach einem beliebigen der vorhergehenden Ansprüche, **dadurch gekennzeichnet, dass** das starre Stück (6) mit Mitteln zur Blockierung (61C₂) ausgerüstet ist, die ausgebildet sind, bei Abwesenheit des Mischerkörpers (2) das starre Stück gegenüber der Hülle (4) gemäß der Verschiebungsachse (Z-Z) zu halten.

9. Mischer nach einem beliebigen der vorhergehenden Ansprüche, **dadurch gekennzeichnet, dass** das starre Stück (6) eine Gesamtform einer Gabel mit zwei parallelen Zinken (61), die sich in der Länge gemäß der Richtung der Verschiebungsachse (Z-Z) erstrecken, und einer Brücke (62), die die zwei Zinken miteinander an ihren Längsenden verbindet, aufweist, und die mit dem Innengewinde (63) und der Auflagefläche (62B₁) gegen die Tnnenfläche (2A) des Mischerkörpers (2) ausgerüstet ist.

10. Verfahren zur Herstellung eines Thermostatmischers (1), bei dem man anordnet:
- einen im Wesentlichen rohrförmigen Mischerkörper (2),
- eine Thermostatkartusche (3), die eine vorzusammengesetzte Anordnung bildet und die eine hohle Hülle (4) aus Kunststoff umfasst, in der Thermostatmittel (5) zum Einstellen der Temperatur einer Flüssigkeit (M), die aus der Kartusche austritt und die durch Mischung ei ner kalten eintretenden Flüssigkeit (F) und einer warm eintretenden Flüssigkeit (C) erhalten wird,
ein starres Stück (6), das zwischen dem Mischerkörper (2) und der Hülle (4), die in das Innere dieses letzteren eingebracht ist, in beweglicher Weise gemäß einer Verschiebungsachse (Z-Z) quer zur Längsachse (X-X) des Mischerkörpers angeordnet ist, wobei dieses starre Stück kinematisch mit der Hülle sowohl gemäß der Richtung der Achse des Mischerkörpers als auch in Drehung um diese Achse verbunden ist,
und eine Schraube (7), die dann in das Innere des Mischkörpers (2) durch ein Loch (21), das quer durch den Mischerkörper hindurchgeht und kleiner ist als ein Kopf (72) dieser Schraube, eingeführt wird, und ein Gewindeschaft (71) der Schraube, der in ein Innengewinde (63) des starren Stücks (6), zentriert auf die Verschiebungsachse (Z-Z') und an einer Fläche (62B) dieses Stücks mündend, die zu dem Mischerkörper gerichtet ist, eingeschraubt wird bis eine Anschlagfläche (62B₁) dieser Fläche gegen die Innenfläche (2A) des Mischerkörpers drückt.
